## Europäisches Patentamt

## European Patent Office

## Office européen des brevets

(19)

(11) Numéro de publication: **0 041 750 B1**

(12)

# FASCICULE DE BREVET EUROPEEN

(45) Date de publication du fascicule du brevet:
**22.08.84**

(51) Int. Cl.³: **C 08 F 14/06, C 08 F 2/42**

(21) Numéro de dépôt: **81200566.8**

(22) Date de dépôt: **26.05.81**

(54) **Procédé pour arrêter rapidement la polymérisation en suspension aqueuse du chlorure de vinyle.**

(30) Priorité: **05.06.80 FR 8012724**

(43) Date de publication de la demande:
**16.12.81 Bulletin 81/50**

(45) Mention de la délivrance du brevet:
**22.08.84 Bulletin 84/34**

(84) Etats contractants désignés:
**AT BE CH DE FR GB IT LI NL SE**

(56) Documents cités:
**FR - A - 2 327 263**
**GB - A - 754 689**

(73) Titulaire: **SOLVAY & Cie (Société Anonyme), Rue du Prince Albert, 33, B-1050 Bruxelles (BE)**

(72) Inventeur: **Noel, Stéphane, Poddegemstraat, 13, B-1850 Grimbergen (BE)**

ACTORUM AG

## Description

La présente invention concerne un procédé pour arrêter rapidement la polymérisation en suspension aqueuse du chlorure de vinyle lorsque celle-ci est opérée à l'intervention de peroxydicarbonates de dialkyles inférieurs.

Les peroxydicarbonates de dialkyles inférieurs sont des initiateurs utilisés couramment, et d'ailleurs très actifs, pour la polymérisation en suspension aqueuse du chlorure de vinyle. Etant donné l'exothermicité de cette réaction de polymérisation, il convient de prendre des dispositions pour pouvoir la contrôler efficacement. En particulier, les appareillages utilisés à cet effet permettent une bonne agitation et une bonne réfrigération du milieu de polymérisation.

Lorsqu'une défectuosité imprévue de l'un ou de plusieurs des organes de régulation intervient en cours de polymérisation, la réaction s'emballe ce qui, par suite de l'augmentation incontrôlable de la température du milieu réactionnel qui en résulte, provoque dans le meilleur des cas une dégradation du polymère. Dans le cas où on ne parvient pas à maîtriser rapidement l'emballement de la polymérisation, il peut en résulter des inconvénients beaucoup plus graves tels que l'explosion du disque de sécurité de l'autoclave et la perte de monomère et de polymère.

Pour des raisons de sécurité et d'économie, il s'avère dès lors indispensable de disposer de moyens efficaces pour arrêter rapidement, s'il y a lieu, le cours de la polymérisation du chlorure de vinyle en suspension aqueuse à l'intervention de peroxydicarbonates de dialkyles inférieurs. Il est par ailleurs d'autant plus impérieux de disposer de tels moyens que la capacité du réacteur de polymérisation est élevée.

Il est connu, d'une manière générale, de terminer les polymérisations en phase hétérogène par addition au milieu de polymérisation, lorsque le taux de conversion souhaité est atteint, d'agents d'arrêt constitués par des réducteurs inorganiques tels que le bisulfite et le dithionite de sodium, l'hydroxylamine ou l'hydrazine (Houben Weyl, Methoden der Organischen Chemie, Makromolekulare Stoffen, Teil 1, p. 434–435).

Par ailleurs, on a déjà proposé de désactiver des peroxydicarbonates de dialkyles inférieurs utilisés pour la polymérisation en suspension aqueuse du chlorure de vinyle par addition au milieu de substances basiques, tels que des hydroxydes, des carbonates et des bicarbonates des métaux alcalins et alcalino-terreux et d'ammonium (brevet belge 846908 déposé le 4 octobre 1976 au nom de SOLVAY & Cie).

Toutefois, les agents d'arrêt réducteurs et les désactivants de l'art antérieur se sont révélés insuffisamment acitfs pour arrêter efficacement et rapidement la polymérisation en suspension aqueuse du chlorure de vinyle à l'intervention de peroxydicarbonates de dialkyles inférieurs, en particulier lorsque le taux de conversion est encore faible.

La présente invention a pour but de procurer des agents d'arrêt particulièrement efficaces de la polymérisation en suspension aqueuse du chlorure de vinyle qui soient utilisables tout au long du cycle de polymérisation, c'est-à-dire tant pour des taux de conversion faibles que pour des taux de conversion élevés.

Elle concerne à cet effet un procédé pour arrêter rapidement la polymérisation en suspension aqueuse du chlorure de vinyle à l'intervention de peroxydicarbonates d'alkyles inférieurs selon lequel on introduit dans la suspension aqueuse des quantités efficaces d'ammoniaque et de thiosulfate de métal alcalin ou d'ammonium.

De fait, les couples d'agents d'arrêt précités conviennent pour arrêter la polymérisation, même lorsque la teneur du réacteur en chlorure de vinyle monomère est encore relativement très importante et que les risques d'explosion, en cas d'emballement, sont élevés. Ils conviennent aussi pour terminer la polymèrisation dans des conditions de fonctionnement normales de l'installation lorsque le taux de conversion souhaité est atteint.

L'activité élevée des couples d'agents d'arrêt utilisés selon l'invention est surprenante au égard au fait que les thiosulfates de métaux alcalins ou d'ammonium constituent, en eux-mêmes, des agents d'arrêt très peu efficaces. L'activité de ces couples d'agents d'arrêt procède donc d'un effet de synergie.

La quantité d'ammoniaque et de thiosulfate qu'il convient d'introduire dans le milieu aqueux pour arrêter la polymérisation n'est pas particulièrement critique. Dans une certaine mesure, cette quantité est liée à la température de polymérisation, au pH du milieu de polymérisation, ainsi qu'au stade d'avancement de ladite polymérisation au moment de l'introduction du couple d'agents d'arrêt.

En pratique, des quantités d'ammoniaque d'environ 50 parties en poids par million (ppm), exprimées en ammoniac, utilisées en mélange avec environ 20 ppm de thiosulfate, par rapport au chlorure de vinyle initialement mis en œuvre, suffisent déjà pour bloquer la polymerisation en des laps de temps acceptables.

Il est toutefois évident que l'introduction de quantités plus importantes d'ammoniaque et de thiosulfate permet d'arrêter plus rapidement encore le cours de la polymérisation. Néanmoins, afin d'éviter de souiller inutilement le polymère, ainsi que le réacteur, il est conseillé de ne pas dépasser des teneurs de 10000 ppm en ammoniaque (exprimées en ammoniac) et en thiosulfate. Généralement, on ne dépasse pas des teneurs de 1000 ppm en ammoniaque (exprimées en ammoniac) et en thiosulfate. De préférence, on utilise de 125 à 500 ppm d'ammoniaque, exprimées en ammoniac, et de 20 à 750 ppm de thiosulfate par rapport au chlorure de vinyle mis en œuvre.

Tous les thiosulfates de métal alcalin ou d'ammonium conviennent à la réalisation du procédé de l'invention. On donne néanmoins la préférence au thiosulfate de sodium, et plus particulièrement encore au thiosulfate de sodium technique de formule $Na_2S_2O_3 \cdot 5H_2O$.

Le mode d'introduction des agents d'arrêt peut être quelconque, ils peuvent être introduits en une ou en plusieurs fois, ensemble ou séparément. Par ailleurs, on peut fabriquer l'ammoniaque «in situ» par introduction d'ammoniac en quantité appropriée. Toutefois, on donne la préférence à l'utilisation d'ammoniaque.

Le procédé selon l'invention s'applique á la polymérisation en suspension aqueuse du chlorure de vinyle en présence de peroxydicarbonates de dialkyles inférieurs comme catalyseurs.

Par peroxydicarbonates de dialkyles inférieurs, on entend désigner les peroxydicarbonates de dialkyles dont les chaînes alkyles, différentes ou identiques et éventuellement substituées, par exemple par des halogènes, contiennent de 1 à 6 atomes de carbone et le plus souvent de 1 à 4 atomes de carbone. De bons résultats ont été obtenus lorsque l'on utilise conjointement avec le procédé selon l'invention, du peroxydicarbonate de diéthyle.

Par aiflleurs, le procédé selon l'invention est applicable lorsque la polymérisation s'effectue en présence des ingrédients usuels de la polymérisation en suspension aqueuse, à savoir des agents dispersants et, éventuellement des agents émulsionnants, ainsi que, le cas échéant, des additifs divers ajoutés à un stade quelconque de la polymérisation tels que des stabilisants, des plastifiants, des colorants, des agents renforçants ou facilitant la mise en œuvre.

Par polymérisation du chlorure de vinyle, on entend l'homopolymérisation du chlorure de vinyle, ainsi que la copolymérisation de mélanges de monomères à teneur prépondérante, et de préférence, supérieure à 80% molaires en chlorure de vinyle, tels que par exemple les mélanges de chlorure de vinyle, tels que par exemple les mélanges de chlorure de vinyle et d'acétate de vinyle de popylène ou d'éthylène.

Le procédé selon l'invention s'applique tout particulièrement à l'arrêt de la polymérisation du chlorure de vinyle en suspension aqueuse à l'intervention de peroxydicarbonates de dialkyles dans des réacteurs de capacité élevée.

Les exemples illustratifs qui suivent se rapportent à l'homopolymérisation du chlorure de vinyle.

Les exemples 1 à 3 se rapportent au blocage à la fin de la polymérisation dans des conditions normales (taux de conversion de 80%).

Les exemples 4 et 5 se rapportent au blocage avec arrêt de l'agitation lorsque le taux de conversion s'élève à 30% seulement.

La durée de prise de plastifiant à 75°C (DPP) et la quantité de plastifiant absorbé (phtalate de diéthylhexyle) sont évaluées dans des conditions usuelles. La durée de prise de plastifiant est d'autant plus faible et la quantité de plastifiant absorbé d'autant plus élevée que la réaction de polymérisation est bien bloquée.

Exemple 1

Dans un réacteur d'une capacité de 3,5 m³, équipé d'un agitateur, d'une double enveloppe thermostatisée et surmonté d'un condenseur à reflux, on introduit à température ambiante et sous reflux, 750 kg d'eau déminéralisée, 1,2 kg d'alcool polyvinylique et 0,28 kg de peroxydicarbonate de diéthyle. On ferme le réacteur, on arrête l'agitateur et on met le réacteur sous vide partiel (13332,2 Pa absolus), puis on le soumet à un balayage par de l'azote (79993,2 Pa absolus) avant de le remettre sous le même vide partiel.

On porte la consigne de température du fluide de refroidissement du condenseur à 65°C. On remet l'agitation en marche et on introduit 1000 kg de chlorure de vinyle et 750 kg d'eau surchauffée initialement à 180°C, les derniers 100 kg étant à température décroissante, de façon à atteindre, en fin de chargement, une température de 61°C dans le milieu de polymérisation. Cet instant est considéré comme le début du cycle complet de polymérisation ($t_o$). On maintient la température de milieu à 61°C pendant toute la durée de la polymérisation. Quelques minutes après le début de la polymérisation, on porte la consigne de température du condenseur à 30°C suivant une rampe de 1°C/minute.

Après 2 h 30 de polymérisation, on injecte 300 litres d'eau. Tous les chargements supérieurs à 100 litres se font en respectant une rampe de débit ascendante au début et descendante en fin d'introduction.

On laisse s'écouler 3 h 15 après le début de la polymérisation (taux de conversion 80%), puis on introduit dans la suspension aqueuse 0,5 kg d'hydroxyde d'ammonium (ammoniaque) et 0,05 kg de thiosulfate de soidium technique ($Na_2S_2O_3 \cdot 5H_2O$) en solution dans 10 litres d'eau.

20 heures après l'injection des agents d'arrêt la chute de pression maximale atteinte, comptée à partir du moment de l'injection $t_{ir}$ s'élève à 147099,75 Pa et le taux de conversion final s'élève à 85,9%. On détend le monomère, on refroidit la suspension et on recueille le polymère par essorage suivi de séchage. On évalue sa durée de prise de plastifiant à 75°C et la quantité de plastifiant absorbé.

Exemple 2

Cet exemple donné à titre de comparaison est réalisé conformément à l'exemple 1 sauf que l'on a utilisé seulement de l'ammoniaque pour bloquer la polymérisation.

Exemple 3

Cet exemple, qui est également comparatif, est réalisé comme l'exemple 1, sauf que l'on a seulement utilisé du thiosulfate de sodium (technique) pour arrêter la polymérisation.

Les conditions de blocage de la réaction de polymérisation, ainsi que les spécifications de la résine obtenue dans les exemples 1, 2 et 3 sont repris au tableau I.

La comparaison des résultats des exemples 1, 2 et 3 montre à suffisance l'activité supérieure, et par ailleurs non prévisible du couple d'agents d'arrêt ammoniaque/thiosulfate de sodium.

Exemple 4

Cet exemple est réalisé dans des conditions identiques à celles de l'exemple 1, si ce n'est que la polymérisation s'effectue à 71°C et qu'au moment de l'injection du couple d'agents d'arrêt, à $t_o + 30$ minutes (taux de conversion : 30%), on arrête l'agitation.

Dans le but de provoquer une certaine turbulence dans le réacteur, on effectue des petits dégazages par à coups (différences de pression de 9806,65 Pa) après 3, 6, 10 et 15 minutes.

Exemple 5

Cet exemple est donné à titre de comparaison. Sa réalisation est conforme en tous points à l'exemple 4, si ce n'est qu'on a seulement utilisé de l'ammoniaque pour bloquer la polymérisation.

Les détails opératoires et les résultats du blocage de la réaction de polymérisation des exemples 4 et 5 sont repris au tableau II.

## Tableau I

| Numéro de l'exemple | Quantité d'agents d'arrêt | | Chute de pression maximale, Pa* | Taux de conversion final, % | DPP à 75°C min., sec | Quantité de plastifiant absorbé, % après 30 min. |
|---|---|---|---|---|---|---|
| | NH₄OH kg | Na₂S₂O₃,5H₂O kg | | | | |
| 1 | 0,5 | 0,05 | 147 099,75 apres 20 heures | 85,9 | 10 min. | 97 |
| 2 | 0,5 | – | 392 266 après 20 heures | 87,4 | 16 min. 35 sec | 73 |
| 3 | – | 0,05 | 578 592,35 après 12 heures | 94,3 | >30 min. | <30 |

\* Comptée à partir de $t_i$

## Tableau II

| Numéro de l'exemple | Quantité d'agents d'arrêt | | Augmentation maximale de la pression, Pa* | Taux de conversion final, % |
|---|---|---|---|---|
| | NH₄OH kg | Na₂S₂O₃,5H₂O kg | | |
| 4 | 1 | 1 | 264 799,55 après 6 min. | 37 |
| 5 | 1 | 0 | 421 685,95 après 10 min. | 40 |

\* Comptée à partir de $t_i$

## Revendications

1. Procédé pour arrêter rapidement la polymérisation en suspension aqueuse du chlorure de vinyle à l'intervention de peroxydicarbonates de dialkyles inférieurs, dont les chaînes alkyles contiennent de 1 à 6 atomes de carbone, caractérisé en ce qu'on introduit dans la suspension aqueuse des quantités efficaces d'ammoniaque et de thiosulfate de métal alcalin ou d'ammonium.

2. Procédé selon la revendication 1, caractérisé en ce qu'on introduit l'ammoniaque en une quantité s'élevant à au moins 50 ppm exprimées en ammoniac et le thiosulfate en une quantité s'élevant à au moins 20 ppm par rapport au chlorure de vinyle mis en œuvre.

3. Procédé selon la revendication 1, caractérisé en ce qu'on introduit l'ammoniaque en des quantités ne dépassant pas 1000 ppm, exprimées en ammoniac et le thiosulfate en des quantités ne dépassant pas 1000 ppm rapport au chlorure de vinyle mis en œuvre.

4. Procédé selon l'une quelconque des revendications 1 à 3, caractérisé en ce qu'on introduit l'ammoniaque en des quantités comprises entre 125 et 500 ppm, exprimées en ammoniac, et le thiosulfate en des quantités comprises entre 20 et 750 ppm.

5. Procédé suivant l'une quelconque des revendications 1 à 4, caractérisé en ce que le thiosulfate est du thiosulfate de sodium.

## Patentansprüche

1. Verfahren zum schnellen Stoppen der Polymerisation von Vinylchlorid in wässriger Suspension mittels niederen Dialkylperoxydicarbonaten, deren Alkylketten 1 bis 6 Kohlenstoffatome enthalten, dadurch gekennzeichnet, dass man in die wässrige Suspension wirksame Mengen von Ammoniak und Alkali- oder Ammoniumthiosulfat einführt.

2. Verfahren gemäss Anspruch 1, dadurch gekennzeichnet, dass man das Ammoniak in einer Menge von mindestens 50 ppm ausgedrückt als Ammoniak und das Thiosulfat in einer Menge von mindestens 20 ppm im Verhältnis zum eingesetzten Vinylchlorid einsetzt.

3. Verfahren gemäss Anspruch 1, dadurch gekennzeichnet, dass man das Ammoniak in Mengen nicht höher als 1000 ppm, ausgedrückt als Ammoniak und das Thiosulfat in Mengen nicht höher als 1000 ppm im Vergleich zum eingesetztenf Vinylchlorid einführt.

4. Verfahren gemäss einem der Ansprüche 1 bis 3, dadurch gekennzeichnet, dass man das Ammoniak in Mengen zwischen 125 und 500 ppm, ausgedrückt als Ammoniak, und das Thiosulfat in Mengen zwischen 20 und 750 ppm einführt.

5. Verfahren gemäss einem der Ansprüche 1 bis 4, dadurch gekennzeichnet, dass das Thiosulfat Natriumthiosulfat ist.

## Claims

1. Process for rapidly stopping the aqueous suspension polymerisation of vinyl chloride carried out with the aid of lower dialkyl peroxydiacarbonates, of which the alkyl chains contain from 1 to 6 carbon atoms, characterised in that effective amounts of ammonia and of alkali metal thiosulphate or ammonium thiosulphate are introduced into the aqueous suspension.

2. Process according to Claim 1, characterised in that the ammonia is introduced in an amount of at least 50 ppm, expressed as ammonia, and the thiosulphate in an amount of at least 20 ppm, relative to the vinyl chloride employed.

3. Process according to Claim 1, characterised in that the ammonia is introduced in amounts not exceeding 1000 ppm, expressed as ammonia, and the thiosulphate in amounts not exceeding 1000 ppm, relative to the vinyl chloride employed.

4. Process according to any one of Claims 1 to 3, characterised in that the ammonia is introduced in amounts of between 125 and 500 ppm, expressed as ammonia, and the thiosulphate in amounts of between 20 and 750 ppm.

5. Process according to any one of Claims 1 to 4, characterised in that the thiosulphate is sodium thiosulphate.